(19) **Europäisches Patentamt**

**European Patent Office**

**Office européen des brevets**

(11) **EP 0 653 236 B1**

(12) **EUROPÄISCHE PATENTSCHRIFT**

(45) Veröffentlichungstag und Bekanntmachung des Hinweises auf die Patenterteilung:
**04.03.1998 Patentblatt 1998/10**

(51) Int. Cl.$^6$: **B01D 53/54**, B01D 53/56

(21) Anmeldenummer: **94117341.1**

(22) Anmeldetag: **03.11.1994**

(54) **Reinigung von methylnitrithaltigen Abgasen**

Purification of methyl nitrite containing exhaust gases

Purification de gaz d'échappement contenant du nitrite de méthyle

(84) Benannte Vertragsstaaten:
**BE CH DE ES FR GB IT LI NL**

(30) Priorität: **15.11.1993 DE 4338982**

(43) Veröffentlichungstag der Anmeldung:
**17.05.1995 Patentblatt 1995/20**

(73) Patentinhaber: **BAYER AG**
**51368 Leverkusen (DE)**

(72) Erfinder:
- **Landscheidt, Heinz, Dr.**
  **D-47057 Duisburg (DE)**
- **Hallenberger, Kaspar, D.I.**
  **D-51375 Leverkusen (DE)**
- **Wagner, Paul, Dr.**
  **D-40597 Düsseldorf (DE)**
- **Klausener, Alexander, Dr.**
  **D-50670 Köln (DE)**

(56) Entgegenhaltungen:
EP-A- 0 090 563          FR-A- 2 222 123
US-A- 4 879 401

- JOURNAL OF THE CHEMICAL SOCIETY, PERKIN TRANSACTIONS 2, Nr. 7, Juli 1988, Letchworth (GB); MJ CROOKES et al., Seiten 1339-1343
- PATENT ABSTRACTS OF JAPAN, Band 013, Nr. 262 (C-608), 16 Juni 1989

**Beschreibung**

Die vorliegende Erfindung betrifft ein Verfahren zur Reinigung von methylnitrithaltigen Abgasen durch Behandlung mit Amidosulfonsäure.

Alkylnitrite (Alkylester der salpetrigen Säure), insbesondere die leichtflüchtigen niedrigen Alkylnitrite, werden als Reagenzien für Oximierungen, Nitrosierungen und Diazofierungen eingesetzt (Houben-Weyl Bd. 6/2 S.334-362).

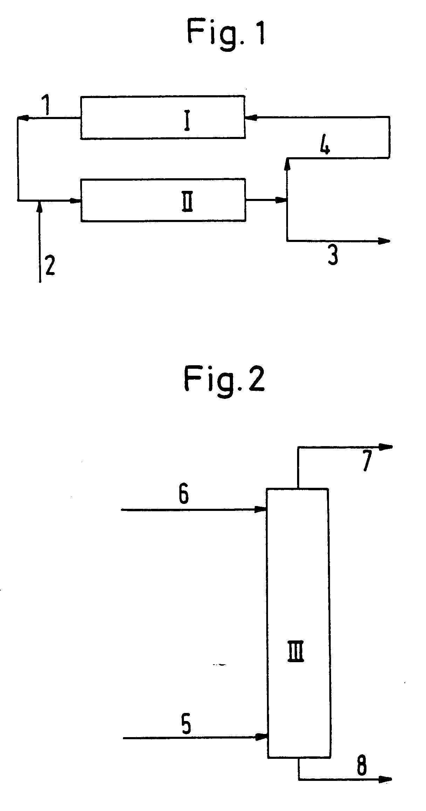

Daneben sind eine Reihe technisch interessanter, kontinuierlich arbeitender Verfahren bekannt, bei denen die Bildung von Alkylnitriten, insbesondere Methylnitrit, in der Gasphase innerhalb eines Gesamtprozesses abläuft, der dadurch gekennzeichnet ist, daß in ihm Alkylnitrite, insbesondere Methylnitrit, als Oxidationsmittel, Cokatalysatoren, Alkoxylierungsreagenzien oder sonstige Reaktionspartner fungieren. Typisch für diese Prozesse ist, daß in ihrem Verlauf das im Alkylnitrit formal enthaltene Stickstoffmonoxid nicht verbraucht, sondern als Gas freigesetzt wird. In einer bevorzugten Ausführungsform derartiger Reaktionen bringt man das soeben erzeugte Alkylnitrit gemeinsam mit dem oder den zusätzlichen Reaktionspartnern und Hilfsstoffen - in den Reaktionsraum bzw. das Reaktionsgefäß ein und führt den im gasförmigen Zustand verbleibenden Anteil des Produktgasstromes, der das im Verlaufe der Reaktion gebildete. Stickstoffmonoxid enthält, nach weitestgehender Abtrennung des oder der kondensierten bzw. kondensierbaren Reaktionsprodukte in den Reaktor für die Alkylnitrit-Herstellung zurück. Damit wird, bezogen auf Stickstoffmonoxid und das jeweilige Alkylnitrit, ein Kreisprozeß geschlossen. Das Prinzip eines derartigen Prozesses ist am Beispiel der Verwendung von Methylnitrit in **Fig. 1** dargestellt. Im einzelnen zeigt Fig. 1 einen Reaktor I zur Herstellung von Alkylnitrit und einen Reaktor II für eine Alkylnitrit verbrauchende Reaktion. Die Stoffströme sind 1 = soeben gebildetes Alkylnitrit, 2 = weitere Reaktionspartner für die Reaktion in II, 3 = das in II gebildete und durch Kondensation gewonnene Reaktionsprodukt und 4 = das bei der Reaktion in II gebildete, NO enthaltende Abgas zur Rückführung nach I.

Reaktionen, bei denen eine solche kontinuierlich betriebene Kreisfahrweise besonders vorteilhaft ist, sind beispielsweise die folgenden :

**(A)** Die Herstellung von Oxalsäuredimethylester aus Kohlenmonoxid und Methylnitrit in Gegenwart geeigneter Katalysatoren (vgl. EP 46 598)

$$2\ CO + 2\ CH_3ONO \xrightarrow[\text{[KAT]}]{} H_3COOC{-}COOCH_3 + 2\ NO$$

**(B)** Die Oxidation gegebenenfalls substituierter Olefine in Gegenwart von Methanol und geeigneten Katalysatoren (vgl. EP 55 108)

$$H_2C{=}CH{-}R + 2\ CH_3ONO \xrightarrow[\text{[KAT]}]{} (H_3CO)_2CH{-}CH_2{-}R + 2\ NO$$

**(C)** Die Herstellung von Dimethylcarbonat aus Kohlermonoxid und Methylnitrit in Gegenwart geeigneter Katalysatoren (vgl. EP 425 197)

$$CO + 2\ CH_3ONO \xrightarrow[\text{[KAT]}]{} H_3CO{-}OC{-}OCH_3 + 2\ NO$$

Wird beim Einsatz eines niedrigsiedenden Alkylnitrits im Rahmen von Diazotierungen, Nitrosierungen oder Oximierungen lediglich ein unvollständiger Umsatz erzielt, so treten alkylnitrithaltige Abgase auf.

Ebenso kann beim Einsatz von Alkylnitriten als regenerierbare Oxidationsmittel, insbesondere bei dein in **(A)**, **(B)** und **(C)** beispielhaft genannten und in **Fig. 1** schematisch wiedergegeben Einsatz von Methylnitrit, die Notwendigkeit bestehen, zur Vermeidung der Anreicherung von Nebenprodukten kleinere Teilmengen aus dem Gaskreislauf zu entnehmen.

Auch das Auftreten unkontrollierter Reaktionsbedingungen beim Umgang mit Alkylnitriten ist mit der Gefahr der Entstehung größerer Mengen alkylnitrithaltiger Abgase verbunden.

Zur technischen Handhabung von Alkylnitriten in Sinne der oben beschriebenen Reaktionen ist es daher aufgrund der Giftigkeit der Alkylnitrite erforderlich, Vorrichtungen zur sicheren Entsorgung dieser alkylnitrithaltigen Abgase zu schaffen.

In JP 59 163 349 (CA 102 95248y) wird ein Verfahren beschrieben, bei dem Methylnitrit durch Einleiten in eine saure Wasserstoffperoxid-Lösung entsorgt wird. Dieses Verfahren ist auf Grund der möglichen Bildung explosiver Sauerstoff/Methylnitrit-Gemische oder anderer leichtzersetzlicher Verbindungen technisch nicht einsetzbar.

Aus dem Dokument JOURNAL OF THE CHEMICAL SOCIETY, PERKIN TRANSACTIONS 2, Nr 7, Juli 1988, Seiten 1939-1943 ist die Reaktion von t-Butylnitrit oder i-Propylnitrit mit Amidosulfonsäure bekannt.

Zur Entfernung von überschüssigen anorganischen Nitriten bzw. von salpetriger Säure aus flüssigen Reaktionsansätzen wurde die Verwendung von Amidosulfonsäure vorgeschlagen. So wird beispielsweise in DE 35 06 825 die Reinigung von nitrithaltigem Abwasser durch Einspritzen unter die Oberfläche von überschüssiger wäßriger Amidosulfonsäure beschrieben. Hierdurch soll die oft beobachtete Bildung nitroser Gase unterdrückt werden.

Es fehlen jedoch Angaben darüber, ob diese Methode zur viel schwierigeren, da in heterogener Reaktion ablaufenden Entfernung von Alkylnitriten aus Gasströmen genutzt werden kann, und daher auch Angaben über eine technische Realisierbarkeit dieser Möglichkeit.

Überraschenderweise wurde gefunden, daß der Alkylnitritanteil in Abgasen aus den oben genannten Reaktionen durch Behandlung dieses Abgases mit wäßriger Amidosulfonsäure und unter Verwendung spezieller Apparaturen deutlich gesenkt werden kann.

Es wurde ein kontinuierliches Verfahren zur Reinigung von methylnitrithaltigen Abgasen gefunden, das dadurch gekennzeichnet ist, daß diese Abgase mit äquimolarer bis überschüssiger Amidosulfonsäure in Form einer wäßrigen Lösung in der Art einer Gegenstromwäsche bei einer Temperatur von 0-100°C behandelt werden und die dabei anfallenden Abgasströme gegebenenfalls noch einer weiteren Reinigung unterworfen werden.

Dabei entstehen nach der **Reaktionsgleichung (1)**

$$CH_3ONO + NH_2SO_3H \rightarrow CH_3OH + N_2 + H_2SO_4 \tag{1}$$

der zugrundeliegende Methylalkohol, Stickstoff und Schwefelsäure, also Stoffe, deren Entsorgung unproblematisch ist.

Die im erfindungsgemäßen Verfahren eingesetzte Amidosulfonsäure ist eine gut verfügbare und sicher handhabbare Verbindung. Sie kann beispielsweise aus Ammoniak und Schwefeltrioxid hergestellt werden (Ullmann, Bd. 22, S. 311-313). Amidosulfonsäure wird in breitem Umfang technisch eingesetzt, so etwa zur Entfernung von Kesselstein oder in Feuerlöschmitteln zur Freisetzung von Kohlendioxid aus Carbonaten.

Das zu reinigende Abgas kann zusätzlich zu dem Methylnitrit gegebenenfalls Inert- bzw. Trägergase, wie beispielsweise Kohlendioxid, Argon oder Stickstoff, sowie noch weitere unter den gegebenen Bedingungen (Druck, Temperatur, Partialdampfdruck) gasförmige Stoffe enthalten, die etwa der vorgeschalteten, das Abgas produzierenden Reaktion entstammen. Bei diesen Stoffen kann es sich beispielsweise um Lösungsmittel, um Reste nicht umgesetzter Reaktionseinsatzstoffe, nicht isolierte oder flüchtige Anteile der Reaktionsprodukte oder gasförmige Nebenprodukte handeln.

Insbesondere können die Abgase, die bei den unter Einsatz von Methylnitrit durchgeführten Oxidationsverfahren, die in den Beispielen **(A)**, **(B)** und **(C)** genannt wurden und die in **Fig. 1** schematisch wiedergegeben sind, auftreten und die im allgemeinen Reste an Stickstoffmonoxid, Kohlenmonoxid oder Methanol enthalten, mit Hilfe des erfindungsgemäßen Verfahrens gereinigt werden, ohne daß dabei unerwünschte Nebenreaktionen auftreten.

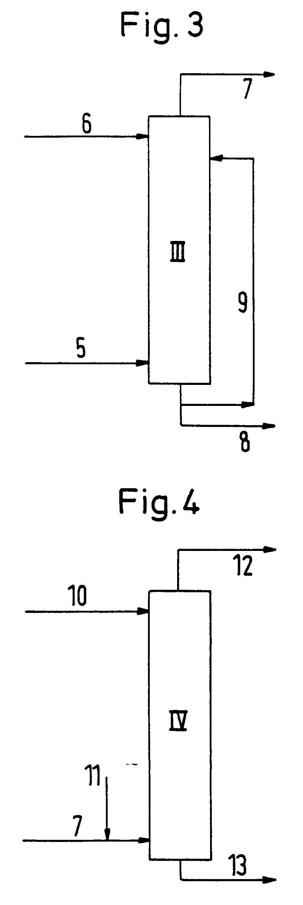

Bestimmte im zu reinigenden Abgas enthaltene Reststoffe, wie beispielsweise Stickstoffmonoxid oder Kohlenmonoxid, werden in der einfachen Ausführungsform des erfindungsgemäßen Verfahrens nicht abgetrennt und daher über die Gasphase ausgetragen. In einer besonderen Ausführungsform des erfindungsgemäßen Verfahrens gelingt gegebenenfalls jedoch auch die unter technischen und ökologischen Gesichtspunkten bedeutsame Abtrennung von Stickoxiden, und zwar durch eine weitere Abgasbehandlung. Dies geschieht bevorzugt dadurch, daß eine geeignete Apparatur, wie sie beispielsweise in **Fig. 4** schematisch dargestellt ist, mit den Abgasen, die die in **Fig. 2** oder **Fig. 3** schematisch dargestellten Apparaturen verlassen, vorzugsweise unter zusätzlicher Einspeisung von Sauerstoff oder sauerstoffhaltigen Gasgemischen, bevorzugt Luft, beschickt wird. Diese zusätzliche Einspeisung von Sauerstoff oder sauerstoffhaltigen Gasgemischen kann in die in **Fig. 4** abgebildete Apparatur hinein oder in die **Fig. 2** und **Fig. 3** verlassenden Abgasströme hinein vorgenommen werden. **Fig. 2**, **Fig. 3** und **Fig. 4** werden weiter unten näher erläutert.

Andere im zu reinigenden Abgas enthaltene Reststoffe, wie beispielsweise Methanol, werden durch das erfindungsgemäße Verfahren ebenfalls aus dem Abgas entfernt. Die Anwesenheit derartiger Reststoffe beeinträchtigt die Leistungsfähigkeit des erfindungsgemäßen Verfahrens und damit die Effizienz der Abgasreinigung nicht.

Die Abgase können vor der Reinigung gegebenenfalls mit inerten Gasen wie Kohlendioxid oder Stickstoff verdünnt werden.

Das nach dem erfindungsgemäßen Verfahren zu reinigende Abgas kann 0,1 bis 45 Vol.-% Methylnitrit enthalten.

Dabei beträgt das molare Verhältnis von zudosierter Amidosulfonsäure zum Methylnitrit 1 : 1 bis 10 : 1, bevorzugt 1 : 1 bis 4 : 1.

Die Amidosulfonsäure wird als wäßrige Lösung in einer Konzentration von 1 - 20 Gew.-%, bevorzugt 10 - 15 Gew.-%, eingesetzt.

Die erfindungsgemäße Reinigung methylnitrithaltiger Abgase wird in der Art einer Gegenstromwäsche durchgeführt.

Zur Durchführung des erfindungsgemäßen Verfahrens werden bevorzugt als ein- oder mehrstufige Wäscher ausgelegte Reaktionskolonnen eingesetzt, die eine große Phasengrenzfläche (gasförmig/flüssig) und eine innige Vermischung der flüssigen und gasförmigen Phasen gewährleisten.

Dies kann durch den Einbau von Böden, wie Glockenböden, Sieblochböden, Ventilböden, Schlitzböden usw., wie sie bei thermischen Trennoperationen üblich sind, oder durch die Ausrüstung der Kolonne mit ungeordneten Füllkörpern aller Art, mit geordneten Packungen aus Metall, Keramik, Kunststoffen, Glas oder mit weiteren Materialien, die gegenüber den Reaktionspartnern des erfindungsgemäßen Verfahrens inert sind, erreicht werden.

Derartige Kolonnen mit Einbauten, Füllungen oder Packungen sowie die Füllungen und Packungen selbst sind handelsüblich und dem Fachmann bekannt.

Bei ihrer Konstruktion wird das Verweilzeitverhalten von Gas und Flüssigkeiten auf die Reaktionsgeschwindigkeit und den erwarteten Alkylnitritgehalt in den zu reinigenden Abgasen abgestimmt.

In **Fig. 2** ist eine schematische Wiedergabe des erfindungsgemäßen Verfahrens dargestellt. Das methylnitrithaltige Gasgemisch 5 wird am Boden der Kolonne III aufgegeben und steigt innerhalb dieser Kolonne empor. Im Gegenstrom dazu bewegt sich eine am Kopf der Kolonne aufgegebene wäßrige Amidosulfonsäure-Lösung 6.

Die am Sumpf entnommene Flüssigkeit 8 enthält neben nicht umgesetzter Amidosulfonsäure die unter den Reaktionsbedingungen flüssig ausgetragenen Reaktionsprodukte der gemäß **Reaktionsgleichung (1)** ablaufenden Umsetzung, also Schwefelsäure und Methylalkohol, sowie weitere im zu reinigenden Gasgemisch enthaltene unter den Reaktionsbedingungen ausgewaschene Komponenten. Sie kann gegebenenfalls weiteren nachgeschalteten Behandlungsschritten wie beispielsweise einer Neutralisation oder einer Aufkonzentrierung unterworfen werden. 7 ist das von Methylnitrit weitgehend befreite Abgas. Das weitgehend befreite Abgas hat einen restlichen Gehalt an Methylnitrit von 0,001 bis 5 % des Ausgangswertes, bevorzugt 0,001 bis 2 %, besonders bevorzugt 0,001 bis 0,5 %.

Möglich ist es ebenfalls, wie in **Fig. 3** dargestellt, einen Teil 9 der am Sumpf anfallenden Flüssigkeit in einen oberhalb der Entnahme gelegenen Teil einer derartigen Reaktionskolonne III zurückzuführen. Die zurückgeführte Lösung kann dabei gegebenenfalls durch Zumischung frischer Amidosulfonsäure angereichert werden. Die weiteren Bezeichnungen entsprechen denen von Fig. 2.

Die Temperatur innerhalb einer derartigen Reaktionskolonne kann gegebenenfalls über zusätzlich angebrachte Kühl- oder Heizaggregate, die bevorzugt im Zirkulationsstrom über dem unteren Teil des zwei- oder mehrstufig ausgeführten Wäschers angebracht sind, eingestellt werden. Am Kopf der Kolonne kann gegebenenfalls ein Kondensator angebracht werden.

Das Verfahren wird in einem Temperaturbereich von 0-100 °C, bevorzugt von 10-80°C, besonders bevorzugt von 20-60°C, durchgeführt.

Der Druck, bei dem das erfindungsgemäße Verfahren durchgeführt wird, liegt bei 0,1-50 bar, vorzugsweise bei 0,5-10 bar.

Für die spezielle Ausführungsform des erfindungsgemäßen Verfahrens, bei der durch einen weiteren Abgasbehandlungsschritt gegebenenfalls noch im Abgas verbliebene Stickoxide, insbesondere Stickstoffmonoxid, beseitigt werden, kommen für diesen Abgasbehandlungsschritt die gleichen Apparaturen und Einbauten wie die oben zur Entfernung von Alkylnitriten aus Prozeßabgasen beschriebenen Apparaturen und Einbauten in Frage, mithin bevorzugt als ein- oder mehrstufige Wäscher ausgeführte und bevorzugt als mit Einbauten versehene Reaktionskolonnen.

In **Fig. 4** ist eine schematische Wiedergabe dieses Teilschrittes der genannten speziellen Ausführungsform des erfindungsgemäßen Verfahrens dargestellt. Das Stickoxid, insbesondere Stickstoffmonoxid enthaltende Gasgemisch 7, wie es in **Fig. 2** oder **Fig. 3** anfallen kann, wird bevorzugt unter zusätzlicher Einspeisung von Sauerstoff oder sauerstoffhaltigem Gemisch (Stoffstrom 11) am Boden der Kolonne IV aufgegeben und steigt innerhalb dieser Kolonne empor. Im Gegenstrom dazu bewegt sich am Kopf der Kolonne aufgegebenes Wasser oder eine wäßrige Lösung einer anorganischen Base, wie beispielsweise wäßrige Natriumhydroxid-Lösung, wäßrige Kaliumhydroxid-Lösung, wäßrige Ammoniaklösung oder wäßrige Calciumhydroxid-Lösung (Stoffstrom 10). Die zusätzliche Einspeisung von Sauerstoff oder sauerstoffhaltigem Gasgemisch, bevorzugt Luft, kann getrennt in den unteren Teil der in **Fig. 4** dargestellten Reaktionskolonne hinein oder in den aus der vorgeschalteten in **Fig. 2** oder **Fig. 3** abgebildeten Apparatur herbeigeführten vorgereinigten Gasstrom hinein (vgl. **Fig. 4**) erfolgen.

Wird Wasser am Kopf der Kolonne aufgegeben, so beträgt die Menge 10 bis 200 Äquivalente, bevorzugt 20 bis 150 Äquivalente, bezogen auf die pro Zeiteinheit in Form von Stickoxiden vorliegenden Äquivalente N.

Im anderen Fall wird pro Zeiteinheit die anorganische Base in einer Menge von 1-5 Äquivalenten, bevorzugt 1,1-4 Äquivalenten, bezogen auf die pro Zeiteinheit in Form von Stickoxiden vorliegenden Äquivalente N eingesetzt. Die Konzentration der anorganischen Base beträgt 1-40 Gew.-%, bevorzugt 5-25 Gew.-%, bezogen auf die gesamte wäßrige Lösung der Base. Von der bevorzugten zusätzlichen Einspeisung von $O_2$ bzw. Luft braucht nur Gebrauch gemacht zu werden, wenn die Zusammensetzung der Stickoxide ihre Umwandlung in salpetrige Säure bzw. Salpetersäure oder deren Salze nicht zuläßt, beispielsweise immer bei einem Überschuß an NO. Die Sauerstoffmenge beträgt in solchen Fällen 100-500 %, bevorzugt 150-400 % derjenigen, die erforderlich ist, um die Stickoxide in salpetrige Säure bzw. deren Salze umzusetzen. Hierbei tritt neben der salpetrigen Säure auch Salpetersäure (gegebenenfalls als Salz) auf.

Die am Sumpf entnommene Flüssigkeit 13 enthält neben überschüssigem Wasser bzw. überschüssiger wäßriger Lösung der zum Einsatz gebrachten anorganischen Base die gelösten Reaktionsprodukte der dem Gasstrom entnommenen Stickoxide, bevorzugt des dem Gasstrom entnommenen Stickstoffmonoxids, mithin Salpetersäure und salpetrige Säure oder die sich von der zum Einsatz gebrachten anorganischen Base ableitenden Salze der Salpetersäure und salpetrigen Säure. Möglich ist es ebenfalls, analog dem in **Fig. 3** wiedergegebenen Prinzip, einen Teil der am Sumpf anfallenden Flüssigkeit in einen oberhalb der Entnahme gelegenen Teil einer derartigen Reaktionskolonne zurückzuführen. Die zurückgeführte Lösung kann dabei gegebenenfalls durch Zumischung frischer anorganischer Base angereichert werden.

Die Temperatur innerhalb einer derartigen Reaktionskolonne kann gegebenenfalls über zusätzlich angebrachte Kühl- oder Heizaggregate, die bevorzugt im Zirkulationsstrom über dem unteren Teil des zwei- oder mehrstufig ausgeführten Wäschers angebracht sind, eingestellt werden. Am Kopf der Kolonne kann gegebenenfalls ein Kondensator angebracht werden.

Der auf diese Weise mit der Entfernung von- Methylnitrit vereinigte Abgasbehandlungsschritt wird in einem Temperaturbereich von 0-100°C, bevorzugt von 10-80°C, besonders bevorzugt von 20-60°C, durchgeführt.

Der Druck, bei dem der der Entfernung von Methylnitrit nachgeschaltete Abgasbehandlungsschritt durchgeführt wird, liegt bei 0,1-50 bar, vorzugsweise bei 0,5-10 bar.

In einer weiteren Variante der Entfernung von Stickoxiden kann dieser Schritt mit der Entfernung des Methylnitrits vereinigt werden und dann in nur einer Kolonne für beide Schritte durchgeführt werden. Hierzu wird das methylnitrithaltige und Stickoxide enthaltende Abgas unter vorheriger Zuführung von Luft oder Sauerstoff in die erste oben beschriebene Kolonne eingeführt und mit der wäßrigen Amidosulfonsäure-Lösung behandelt. Temperatur, Druck, $O_2$-Menge und $H_2O$-Menge entsprechend den obigen Angaben. Man erhält hierbei einen Sumpfablauf aus der Kolonne, der zusätzlich zum Methylalkohol und überschüssiger Amidosulfonsäure noch Salpetersäure, salpetrige Säure oder beide enthält.

Das erfindungsgemäße Verfahren findet beispielsweise Anwendung zur Reinigung von Abgasen aus Oximierungen, Diazotierungen bzw. Nitrosierungen, die in Gegenwart von bzw. unter Verwendung von Methylnitrit durchgeführt wurden. Es findet weiterhin Anwendung bei Abgasen aus der Herstellung von. Dimethylcarbonaten oder Dimethyloxalaten durch Oxidation von Kohlenmonoxid mit Methylnitrit. Schließlich wird es auf Abgase angewandt, die aus der Oxidation von Olefinen in Gegenwart von Methylnitrit, stammen.

## Beispiele

## Beispiel 1

In den unteren Teil (unterhalb des untersten Bodens) einer Glaskolonne mit 20 praktischen Böden wurde bei einem Druck von 1 bar und einer Temperatur von 25°C ein zeitlich konstanter Volumenstrom von 500 l/h eines Gasgemisches eingeleitet, das einen Methylnitrit-Anteil von 15 Vol.-% besaß.

Am Kopf der Kolonne wurde gleichzeitig ein zeitlich konstanter Strom von 20 l/h einer 15% igen wäßrigen Amidosulfonsäure-Lösung eingespeist.

Das die Kolonne verlassende Abgas enthielt nur noch 0,005 Vol.-% Methylnitrit.

## Beispiel 2

In den unteren Teil (unterhalb des untersten Bodens) einer Glaskolonne mit 20 praktischen Böden wurde bei einem Druck von 1 bar und einer Temperatur von 25°C ein zeitlich konstanter Volumenstrom von 100 l/h eines Gasgemisches eingeleitet, das einen Methylnitrit-Anteil von 45 Vol.-% besaß.

Am Kopf der Kolonne wurde gleichzeitig ein zeitlich konstanter Strom von 2 l/h einer 15% igen wäßrigen Amidosulfonsäure-Lösung eingespeist.

Das die Kolonne verlassende Abgas enthielt nur noch 0,002 Vol.-% Methylnitrit.

## Beispiel 3

In den unteren Teil (unterhalb des untersten Bodens) einer Glaskolonne mit 30 praktischen Böden wurde bei einem Druck von 1 bar und einer Temperatur von 25°C ein zeitlich konstanter Volumenstrom von 500 l/h eines Gasgemisches eingeleitet, das einen Methylnitrit-Anteil von 1,5 Vol.-% besaß.

Am Kopf der Kolonne wurde gleichzeitig ein zeitlich konstanter Strom von 4 l/h einer 15% igen wäßrigen Amidosulfonsäure-Lösung eingespeist.

Das die Kolonne verlassende Abgas enthielt nur noch 0,005 Vol.-% Methylnitrit.

## Beispiel 4

In den unteren Teil (unterhalb des untersten Bodens) einer Glaskolonne mit 20 praktischen Böden wurde bei einem Druck von 1 bar und einer Temperatur von 25°C ein zeitlich konstanter Volumenstrom von 500 l/h eines Gasgemisches eingeleitet, das einen Methylnitritanteil von 15 % und einen Stickstoffmonoxidanteil von 15 % besaß.

Am Kopf der Kolonne wurde gleichzeitig ein zeitlich konstanter Strom von 20 l/h einer 15 %igen wäßrigen Amidosulfonsäure-Lösung eingespeist.

Das die Kolonne verlassende Abgas wurde mit einem Sauerstoffstrom von 50 l/h gemischt und in den unteren Teil einer zweiten Glaskolonne eingeleitet.

Am Kopf dieser Kolonne wurde gleichzeitig ein zeitlich konstanter Strom von 4 l/h einer 10 %igen Natronlauge eingespeist.

In dem die Kolonne verlassende Abgas konnten kein Methylnitrit und keine Stickstoffoxide mehr nachgewiesen werden.

## Patentansprüche

1. Kontinuierliches Verfahren zur Reinigung von methylnitrithaltigen Abgasen, dadurch gekennzeichnet, daß diese Abgase mit äquimolarer bis überschüssiger Amidosulfonsäure in Form einer wäßrigen Lösung in der Art einer Gegenstromwäsche bei einer Temperatur von 0-100°C behandelt werden und die dabei anfallenden Abgasströme gegebenenfalls noch einer weiteren Reinigung unterworfen werden.

2. Verfahren nach **Anspruch 1**, dadurch gekennzeichnet, daß die Behandlung bei einer Temperatur von 10-80 °C, bevorzugt von 20-60 °C, durchgeführt wird.

3. Verfahren nach **Anspruch 1**, dadurch gekennzeichnet, daß die Behandlung bei einem Druck von 0,1-50 bar, bevorzugt von 0,5-10 bar, durchgeführt wird.

4. Verfahren nach **Anspruch 1**, dadurch gekennzeichnet, daß das molare Verhältnis von zudosierter Amidosulfonsäure zum Methylnitrit 1 : 1 bis 10 : 1, bevorzugt 1 : 1 bis 4 : 1, beträgt.

5. Verfahren nach **Ansprüchen 1-4**, dadurch gekennzeichnet, daß es sich bei der weiteren Abgasbehandlung um die Entfernung restlicher Stickoxide, bevorzugt Stickstoffmonoxid, durch eine Wasserwäsche, gegebenenfalls in Gegenwart von wäßrigen anorganischen Basen und gegebenenfalls in Gegenwart von Sauerstoff handelt.

6. Verfahren nach **Anspruch 5**, dadurch gekennzeichnet, daß die weitere Abgasbehandlung in Form einer Gegenstromwäsche durchgeführt wird.

7. Verfahren nach **Anspruch 5**, dadurch gekennzeichnet, daß der zur weiteren Abgasbehandlung vorgesehene Abgasstrom und/oder die zur weitern Abgasbehandlung vorgesehene Apparatur zusätzlich mit Sauerstoff oder sauerstoffhaltigen Gasgemischen, bevorzugt mit Luft, beschickt wird.

8. Verfahren nach Ansprüchen 1-4, dadurch gekennzeichnet, daß die Behandlung mit Amidosulfonsäure und die weitere Reinigung in nur einer Kolonne durchgeführt werden und hierzu Sauerstoff oder sauerstoffhaltiges Gas dem zu reinigenden Abgas vor Eintritt in die einzige Gegenstromwäsche zugeführt wird oder simultan zum Abgas der Gegenstromwäsche in der Nähe des Abgaseintritts zugeführt wird.

## Claims

1. Continuous method for the purification of methyl nitrite-containing exhaust gases, characterized in that these exhaust gases are treated with equimolar to excess amidosulphonic acid in the form of an aqueous solution in the manner of a counter-current scrubbing at a temperature of 0-100°C and the exhaust gas streams arising in this are subjected if necessary to a still further purification.

2. Method according to **Claim 1**, characterized in that the treatment is carried out at a temperature of 10-80°C, preferably 20-60°C.

3. Method according to **Claim 1**, characterized in that the treatment is carried out at a pressure of 0.1-50 bar, preferably 0.5-10 bar.

4. Method according to **Claim 1**, characterized in that the molar ratio of added amidosulphonic acid to the methyl nitrite is 1:1 to 10:1, preferably 1:1 to 4:1.

5. Method according to **Claims 1-4**, characterized in that the further exhaust gas treatment is the removal of residual nitrogen oxides, preferably nitrogen monoxide, by a water scrubbing, in the absence or presence of aqueous inorganic bases and in the absence or presence of oxygen.

6. Method according to **Claim 5**, characterized in that the further exhaust gas treatment is carried out in the form of a counter-current scrubbing.

7. Method according to **Claim 5**, characterized in that the exhaust gas stream provided for the further exhaust gas treatment and/or the equipment set-up provided for the further exhaust gas treatment is additionally fed with oxygen or oxygen-containing gas mixtures, preferably with air.

8. Method according to Claims 1-4, characterized in that the treatment with amidosulphonic acid and the further purification are carried out in only one column and for this purpose oxygen or oxygen-containing gas is fed to the exhaust gas to be purified prior to entry into the single counter-current scrubbing or is fed to the counter-current scrubbing in the vicinity of the exhaust gas entry simultaneously with the exhaust gas.

**Revendications**

1. Procédé en continu pour la purification de gaz d'échappement contenant du nitrite de méthyle, caractérisé en ce qu'on traite ces gaz d'échappement avec des quantités d'acide amidosulfonique allant de quantités équimolaires à des quantités en excès sous forme d'une solution aqueuse, à la manière d'un lavage à contre-courant, à une température de 0-100°C, et on soumet les courants de gaz d'échappement que l'on obtient en l'occurrence le cas échéant à une purification ultérieure.

2. Procédé selon la revendication 1, caractérisé en ce qu'on effectue le traitement à une température de 10-80°C, de préférence de 20-60°C.

3. Procédé selon la revendication 1, caractérisé en ce qu'on effectue le traitement sous une pression de 0,1-50 bar, de préférence de 0,5-10 bar.

4. Procédé selon la revendication 1, caractérisé en ce que le rapport molaire de l'acide amidosulfonique ajouté de manière dosée au nitrite de méthyle s'élève de 1:1 à 10:1, de préférence de 1:1 à 4:1.

5. Procédé selon les revendications 1 à 4, caractérisé en ce qu'il s'agit, en ce qui concerne le traitement ultérieur des gaz d'échappement, de l'élimination d'oxydes d'azote résiduels, de préférence de monoxyde d'azote via un lavage à l'eau, éventuellement en présence de bases inorganiques aqueuses et éventuellement en présence d'oxygène.

6. Procédé selon la revendication 5, caractérisé en ce qu'on effectue le traitement ultérieur des gaz d'échappement sous la forme d'un lavage à contre-courant.

7. Procédé selon la revendication 5, caractérisé en ce qu'on charge le courant de gaz d'échappement prévu pour le traitement ultérieur des gaz d'échappement et/ou l'appareil prévu pour le traitement ultérieur des gaz d'échappement en outre avec de l'oxygène ou des mélanges de gaz oxygénés, de préférence avec de l'air.

8. Procédé selon les revendications 1-4, caractérisé en ce qu'on effectue le traitement avec de l'acide amidosulfonique et la purification ultérieure dans une seule et même colonne et, on achemine à cet effet de l'oxygène ou du gaz oxygéné au gaz d'échappement à purifier avant l'entrée de ce dernier dans le lavage unique à contre-courant ou bien on l'achemine, simultanément au gaz d'échappement, au lavage à contre-courant à proximité de l'entrée des gaz d'échappement.

# Fig. 1

# Fig.2

# Fig. 3

# Fig. 4